# EUROPEAN PATENT APPLICATION

(11) **EP 2 597 623 A2**
(43) Date of publication of application: **29.05.2013**
(21) Application number: 12193630.6
(22) Date of filing: 21.11.2012
(51) Int. Cl.: G06T 19/00, G06T 7/00, G06F 3/00

(54) **Apparatus and method for providing augmented reality service for mobile terminal**

(30) Priority: 22.11.2011 KR 20110122176
(71) Applicant: Samsung Electronics Co., Ltd, Gyeonggi-do 443-742 (KR)
(72) Inventor: Lee, Gong-Wook, Gyeongsangbuk-do (KR); Lee, Jun-Ho, Gyeonggi-do (KR); Shin, Dae-Kyu, Gyeonggi-do (KR); Lee, Eun-Joo, Daegu (KR); Hwang, Sum, Gyeonggi-do (KR)
(74) Representative: Hutter, Jacobus Johannes

(57) **Abstract**

An apparatus and method for providing an augmented reality service in a mobile terminal are provided. A method for providing an augmented reality service in a mobile terminal includes generating an augmented reality service scene using surrounding information, identifying recognizable at least one marker based on the augmented reality service scene, generating a guide scene considering the recognizable at least one marker, and adding the guide scene to a part of the augmented reality service scene and displaying the added scene.

## Description

### TECHNICAL FIELD OF THE INVENTION

The present disclosure relates to an apparatus and method for providing an augmented reality service for a mobile terminal.

### BACKGROUND OF THE INVENTION

Augmented reality represents a technology for combining virtual objects with real information that a service terminal recognizes in a real space, and displaying the combination result. Here, the real information includes a surrounding image of the service terminal, a surrounding sound, location information and the like.

The service terminal can provide an augmented reality service based on matching or non-matching between real information provided from real space and virtual information from a marker(s). For instance, when the real information that the service terminal acquires from the surrounding environment is matched with a marker, the service terminal produces supplementary information of the marker matched with the real information. Here, a marker represents object information to which the supplementary information for the augmented reality service is mapped.

As described above, there is an advantage that the service terminal can provide a variety of kinds of supplementary information through an augmented reality service.

However, a problem can occur in which, when a service terminal fails to accurately recognize a marker for an augmented reality service, a user goes through trial and error many times to use the augmented reality service.

### SUMMARY OF THE INVENTION

To address the above-discussed deficiencies of the prior art, it is a primary object of the invention to provide an apparatus and method for providing an augmented reality service for a mobile terminal.

It is a further object of the invention to provide an apparatus and method for providing a user with marker information for an augmented reality service for a mobile terminal.

It is a further object of the invention to provide an apparatus and method for providing a guide scene for an augmented reality service for a mobile terminal.

It is a further object of the invention to provide an apparatus and method for providing a guide scene including marker information for an augmented reality service in a mobile terminal.

It is a further object of the invention to provide an apparatus and method for setting a view port for supplementary information of an augmented reality service in a mobile terminal.

It is a further object of the invention to provide an apparatus and method for displaying supplementary information of an augmented reality service according to preset view port information in a mobile terminal.

According to a first aspect of the invention at least one of these object is achieved by providing a method for providing an augmented reality service in a mobile terminal. The method comprising the steps of :generating an augmented reality service scene using surrounding information, determining at least one marker based on the augmented reality service scene, generating a guide scene based on the at least one recognized marker, and adding the guide scene to a part of the augmented reality service scene and displaying the resultant scene.
An embodiment of the method further comprises if the marker displayed on the guide scene is selected, producing the augmented reality supplementary information of the marker.
According to a second aspect of the invention at least one of these object is achieved by a mobile terminal comprising:
a controller configured to generate an augmented reality service scene using surrounding information, to determine at least one marker based on the augmented reality service scene, to generate a guide scene based on the at least one recognized marker and to add the guide scene to a part of the augmented reality service scene; and
a display unit configured to display the added scene.

Also, if the augmented reality service scene matched with the marker through the display unit is recognized, the controller controls to identify the augmented reality supplementary information of the marker and, if a view port for the augmented reality supplementary information has been set, display the augmented reality supplementary information on a screen according to view port setting information.
Further advantageous embodiments of the present invention are defined in the dependent claims.

According to a third aspect of the invention at least one of these object is achieved by providing a method for providing an augmented reality service in a mobile terminal. The method comprising the steps of: generating an augmented reality service scene using surrounding information, determining at least one marker based on the augmented reality service scene, identifying guide scene generation information, generating the guide scene comprising the at least one recognized marker according to the guide scene generation information; adding the guide scene on a part of the augmented reality service scene, and displaying the added scene, wherein the surrounding information comprises at least one of a surrounding image, a surrounding sound, motion information of the mobile terminal and location information of the mobile terminal, wherein the guide scene generation information comprises at least one of a size of the guide scene, the transparency of the guide scene, and a color of the guide scene.

According to a fourth aspect of the invention at least one of these object is achieved by providing a mobile terminal comprising: a means for generating an augmented reality service scene using surrounding information, a means for determining at least one marker based on the augmented reality service scene, a means for generating a guide scene based on the at least one recognized marker, a means for adding the guide scene on a part of the augmented reality service scene, and a means for displaying the added scene.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a block diagram illustrating a structure of a mobile terminal according to one embodiment of the present disclosure;

FIG. 2 is a flowchart illustrating a procedure for displaying a guide scene for a mobile terminal according to an exemplary embodiment of the present disclosure;

FIG. 3 is a flowchart illustrating a procedure for displaying a guide scene for a mobile terminal according to another exemplary embodiment of the present disclosure;

FIG. 4 is a flowchart illustrating a procedure for generating a guide scene for a mobile terminal according to an exemplary embodiment of the present disclosure;

FIG. 5 is a flowchart illustrating a procedure for providing augmented reality supplementary information through a guide scene for a mobile terminal according to an exemplary embodiment of the present disclosure;

FIG. 6 is a flowchart illustrating a procedure for providing augmented reality supplementary information for a mobile terminal according to an exemplary embodiment of the present disclosure;

FIG. 7 is a flowchart illustrating a procedure for providing augmented reality supplementary information for a mobile terminal according to another exemplary embodiment of the present disclosure; and

FIG. 8 is a diagram illustrating a generation of a guide scene according to an exemplary embodiment of the present disclosure.

### DETAILED DESCRIPTION OF THE INVENTION

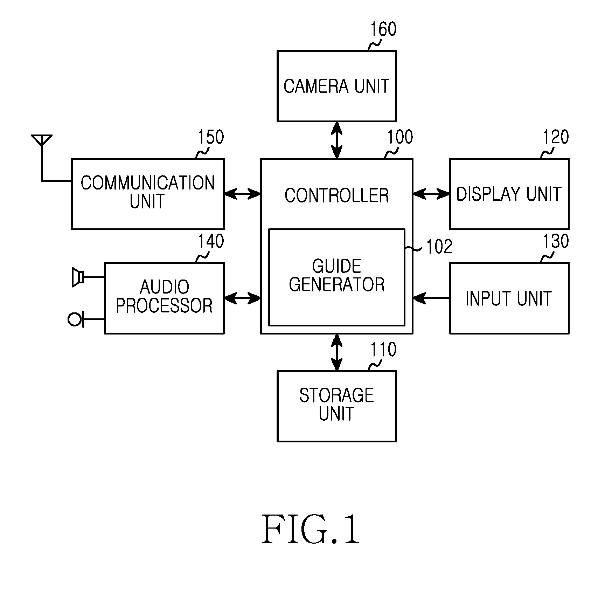

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile electronic device. Preferred embodiments of the present disclosure will be described herein below with reference to the accompanying drawings. In the following description, well-known functions or constructions are not described in detail since they would obscure the invention in unnecessary detail. And, terms described below, which are defined considering functions in the present disclosure, can be different depending on user and operator's intention or practice. Therefore, the terms should be defined on the basis of the disclosure throughout this specification.

The present disclosure describes a technology for providing an augmented reality service in a mobile terminal. In the following description, a mobile terminal can be any suitable electronic device such as a mobile communication terminal providing an augmented reality service, a Mobile Digital Assistant (PDA), a laptop computer, a smart phone, a netbook, a Mobile Internet Device (MID), a Ultra Mobile Personal Computer (UMPC), a table PC and the like. In the following description, it is assumed that a mobile terminal provides an augmented reality service using visual information acquired through a camera.

FIG. 1 is a block diagram illustrating a structure of a mobile terminal according to the present disclosure. The mobile terminal includes a controller 100, a storage unit 110, a display unit 120, an input unit 130, an audio processor 140, a communication unit 150 and a camera unit 160.

The controller 100 controls the whole operation of the mobile terminal. The controller 100 combines virtual objects with images provided from the camera unit 160 to provide an augmented reality service. For example, the controller 100 generates an augmented reality service scene using augmented reality generation information, which includes the images provided from the camera unit 160. After that, when a marker is matched with the augmented reality service scene, the controller 100 controls to produce augmented reality supplementary information of the marker matched with the augmented reality service scene. If a view port for the augmented reality supplementary information has been set, the controller 100 controls to output the augmented reality supplementary information according to view port setting information. Here, the marker represents object information to which the supplementary information for the augmented reality service is mapped. The view port setting information includes information for producing the augmented reality supplementary information. The augmented reality supplementary information includes at least one of an output angle for the augmented reality supplementary information, an output size, an output color, a producing starting position, and a producing speed.

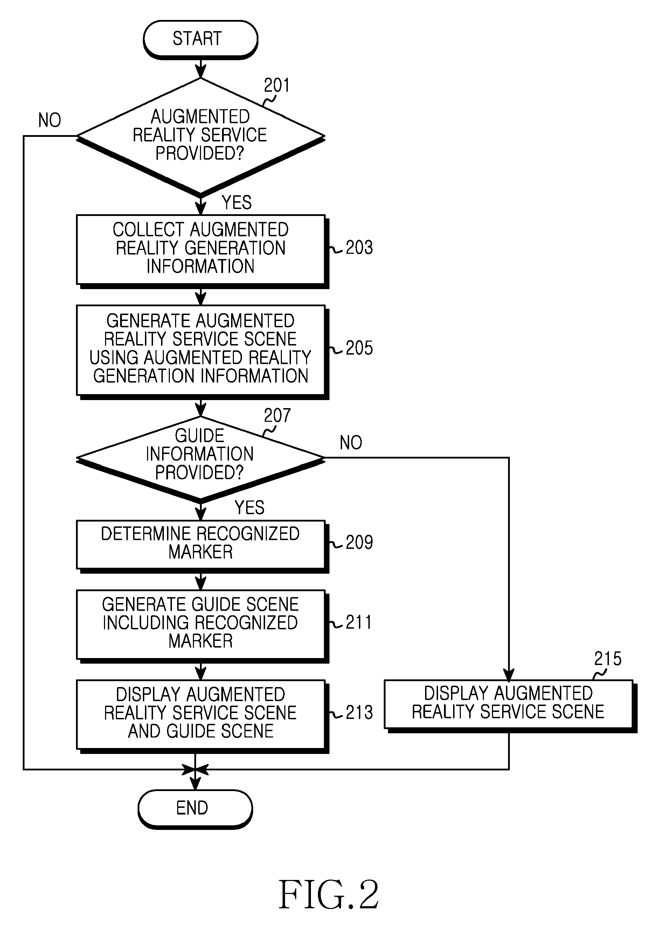

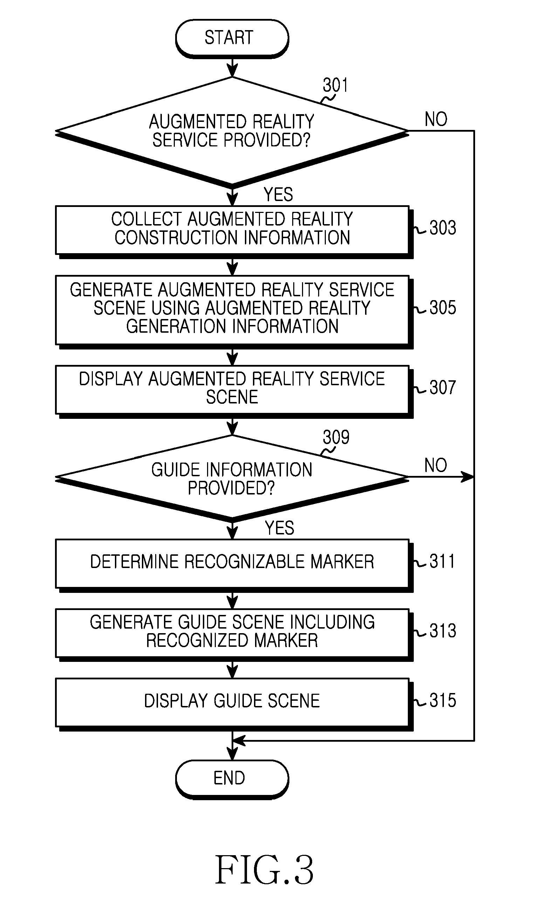

Also, when providing the augmented reality service, the controller 100 controls to output a guide scene which is generated at a guide generator 102 together with the augmented reality service scene. For example, the controller 100 controls to provide the guide scene for the augmented reality service together with the augmented reality service scene as illustrated in FIG. 2 or FIG. 3.

Additionally, when a marker displayed on the guide scene has been selected by a user of the mobile terminal, the controller 100 controls to produce the augmented reality supplementary information of the marker selected by the user. If a view port for the augmented reality supplementary information has been set, the controller 100 controls to produce the augmented reality supplementary information according to view port setting information.

The guide generator 102 generates a guide scene including recognized object(s), which is recognized for an augmented reality service in the controller 100. For example, the guide generator 102 collects a marker(s) for the augmented reality service on the basis of augmented reality generation information collected to provide the augmented reality service in the controller 100. After that, the guide generator 102 generates the guide scene to include all markers that are recognized in the controller 100. For another example, the guide generator 102 may generates the guide scene to include a preset number of markers from the markers recognized in the controller 100.

The storage unit 110 can include a program storage unit and a data storage unit. The program storage unit stores a program for controlling an operation of the mobile terminal. The data storage unit stores data generated during execution of a program. For example, the storage unit 110 stores at least one marker for an augmented reality service.

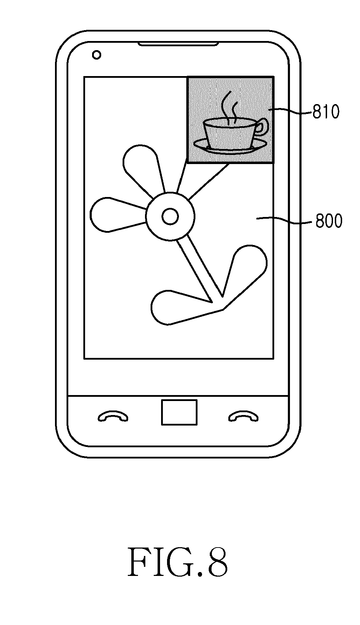

The display unit 120 displays status information of the mobile terminal, a character input by a user, a moving picture, a still picture and the like according to the control operation of the controller 100. For instance, as illustrated in FIG. 8, the display unit 120 displays an augmented reality service scene 800 and a guide scene 810 that is generated in the guide generator 102, according to the control operation of the controller 100. For another instance, the display unit 120 displays a production scene for augmented reality supplementary information according to the control operation of the controller 100. If a view port for the augmented reality supplementary information has been set, the display unit 120 displays the produced scene for the augmented reality supplementary information according to view port setting information.

Additionally, the display unit 120 can include a touch screen and a touch input unit for providing touch information sensed through a touch panel, to the controller 100.

The input unit 130 provides data entered by a user to the controller 100. For instance, the input unit 130 includes only a control button for control of the mobile terminal. For another instance, the input unit 130 can include a keypad for receiving input data from a user.

The audio processor 140 controls input/output of an audio signal. For example, the audio processor 140 transmits an audio signal which is provided from the controller 100 outside through a speaker, and provides an audio signal which is transmitted from a microphone to the controller 100.

The communication unit 150 processes a signal transmitted/received through an antenna for voice and data communication.

The camera unit 160 converts image data capturing a subject into digital data, and provides a still picture which is acquired from the digital data to the controller 100.

As described above, the guide generator 102 may generate a guide scene including a preset number of markers from markers recognizable in the controller 100. For example, the guide generator 102 generates the guide scene including at least one marker with a high recognition probability from the markers recognized in the controller 100. Here, the recognition probability of the marker can be determined based on at least one of a distance between the mobile terminal and the marker and the number of times of recognition of the marker.

A method for providing a guide scene in a mobile terminal is described as follows.
FIG. 2 illustrates a procedure for displaying a guide scene in a mobile terminal according to an exemplary embodiment of the present disclosure. At step 201, the mobile terminal determines whether to provide an augmented reality service. For example, the mobile terminal determines whether to execute an augmented reality application according to user's manipulation.

When it is determined at step 201 not to provide the augmented reality service, the mobile terminal terminates the algorithm of the present disclosure.

Alternatively, if it is determined at step 201 to provide the augmented reality service, the mobile terminal proceeds to step 203 and collects augmented reality generation information. For example, the mobile terminal collects the augmented reality generation information such as a surrounding image, a surrounding sound, motion information of the mobile terminal, location information of the mobile terminal and the like.

After collecting the augmented reality generation information, the mobile terminal proceeds to step 205 and generates an augmented reality service scene using the augmented reality generation information in order to provide the augmented reality service scene to a user for the augmented reality service.

Next, the mobile terminal proceeds to step 207 and determines whether to provide guide information. For example, the mobile terminal determines if a guide information provision menu has been set. Here, the guide information represents a service of providing a user of the mobile terminal with a marker recognizable in the mobile terminal so that the user can easily recognize a marker to augmented reality supplementary information.

When it is determined at step 207 to provide the guide information, the mobile terminal proceeds to step 209 and determines at least one recognized marker. For example, the mobile terminal determines at least one recognized marker in the mobile terminal according to an augmented reality application being running. For another example, the mobile terminal may determine at least one marker recognizable in the mobile terminal considering the augmented reality construction information.

After determining the recognizable marker, the mobile terminal proceeds to step 211 and generates a guide scene including the at least one recognized marker. For instance, the mobile terminal generates the guide scene to include all recognizable markers. For another instance, the mobile terminal may construct the guide scene to include a preset number of markers among the recognizable markers. In an exemplary embodiment, the mobile terminal can select a marker to be added to the guide scene considering a recognition probability of the marker. Here, the recognition probability of the marker can be determined considering at least one of a distance between the mobile terminal and the marker and the number of times of recognition of the marker.

After generating the guide scene, the mobile terminal proceeds to step 213 and displays the guide scene generated at step 211 together with the augmented reality service scene generated at step 205, on the display unit 120. For example, the mobile terminal displays a guide scene 810 together with an augmented reality service scene 800 as illustrated in FIG. 8.

Alternately, if it is determined in step 207 not to provide the guide information, the mobile terminal proceeds to step 215 and displays the augmented reality service scene constructed in step 205, on the display unit 120.

Next, the mobile terminal terminates the algorithm of the present disclosure. FIG. 3 illustrates a procedure for displaying a guide scene in a mobile terminal according to another exemplary embodiment of the present disclosure. At step 301, the mobile terminal determines whether to provide an augmented reality service. For example, the mobile terminal determines whether to execute an augmented reality application according to user's manipulation.

If it is determined at step 301 not to provide the augmented reality service, the mobile terminal terminates the algorithm of the present disclosure.

Alternatively, when it is determined at step 301 to provide the augmented reality service, the mobile terminal proceeds to step 303 and collects augmented reality generation information. For example, the mobile terminal collects the augmented reality construction information such as a surrounding image, a surrounding sound, motion information of the mobile terminal, location information of the mobile terminal and the like.

After collecting the augmented reality construction information, the mobile terminal proceeds to step 305 and generates an augmented reality service scene using the augmented reality generation information in order to provide the augmented reality service scene to a user for the augmented reality service.

Next, after generating the augmented reality service scene, the mobile terminal proceeds to step 307 and displays the augmented reality service scene on the display unit 120.

After that, the mobile terminal proceeds to step 309 and determines whether to provide guide information. For example, the mobile terminal determines if a guide information provision menu has been set.

If it is determined in step 309 not to provide the guide information, the mobile terminal terminates the algorithm of the present disclosure.

If it is determined in step 309 to provide the guide information, the mobile terminal proceeds to step 311 and determines the number of one or more recognizable marker(s). For example, the mobile terminal determines at least one marker recognizable in the mobile terminal according to an active augmented reality application. For another example, the mobile terminal can determine at least one marker recognizable in the mobile terminal based on the augmented reality generation information.

After determining the number of the recognizable markers, the mobile terminal proceeds to step 313 and generates a guide scene including the marker recognized by the mobile terminal. For instance, the mobile terminal generates the guide scene to include all recognized markers. For another instance, the mobile terminal can generate the guide scene to include a preset number of markers from the recognized markers. In an exemplary embodiment, the mobile terminal selects a marker to be added to the guide scene based on a recognition probability of the marker. Here, the recognition probability of the marker can be determined considering at least one of a distance between the mobile terminal and the marker and the number of times of recognition of the marker.

After generating the guide scene, the mobile terminal proceeds to step 315 and adds the guide scene generated at step 313 to the augmented reality service scene displayed on the display unit 120 at step 307. For example, the mobile terminal adds a guide scene 810 to an augmented reality service scene 800 displayed on the display unit 120, as illustrated in FIG. 8.

Next, the mobile terminal terminates the algorithm of the present disclosure.

In the aforementioned exemplary embodiment, the mobile terminal displays a guide scene together with an augmented reality service scene on the display unit 120. In case of producing augmented reality supplementary information of a marker matching with the augmented reality service scene, the mobile terminal does not display the guide scene. And then, if the reproduction of the augmented reality supplementary information ends, the mobile terminal again displays the guide scene. For another example, the mobile terminal can continuously display a guide scene including other marker when producing the augmented reality supplementary information.

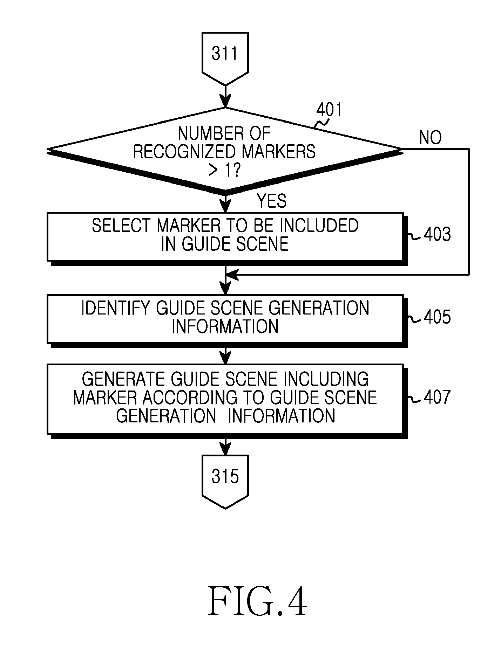

As described above, as illustrated in FIG. 2 or FIG. 3, if providing guide information, the mobile terminal adds a guide scene to an augmented reality service scene and displays the resultant scene. In an exemplary embodiment, the mobile terminal can generate the guide scene as illustrated in FIG. 4.

FIG. 4 illustrates a procedure for generating a guide scene in a mobile terminal according to an exemplary embodiment of the present invention. In the following description, it is assumed that the mobile terminal generates a guide scene in step 313 of FIG. 3.

After determining a recognizable marker in step 311 of FIG. 3, the mobile terminal proceeds to step 401 and identifies the number of recognizable markers. For example, the mobile terminal determines if the number of recognizable markers is one.

If it is determined at step 401 that the number of recognizable markers is one, the mobile terminal jumps to step 405 and identifies guide scene generation information. For example, the mobile terminal identifies the guide scene generation information stored in the storage unit 110. For another example, the mobile terminal can determine the guide scene generation information based on surrounding information, which includes ambient brightness of the mobile terminal, a motion of the mobile terminal and the like. Here, the guide scene construction information includes at least one of a size of a guide scene, the transparency of the guide scene, and a color of the guide scene.

Alternatively, if it is determined in step 401 that there are a plurality of recognizable markers, the mobile terminal proceeds to step 403 and selects at least one marker to be included in the guide scene among the recognizable markers. For example, the mobile terminal selects at least one marker with a high recognition probability among the recognizable markers. Here, the recognition probability of the marker can be determined based on at least one of a distance between the mobile terminal and the marker and the number of times of recognition of the marker.

Next, the mobile terminal proceeds to step 405 and identifies the guide scene generation information. Here, the guide scene generation information includes a size of the guide scene, the transparency of the guide scene, and a color of the guide scene.

After identifying the guide scene construction information, the mobile terminal proceeds to step 407 and generates a guide scene including the at least one marker according to the guide scene generation information.

Next, the mobile terminal proceeds to step 315 of FIG. 3 and adds the guide scene to an augmented reality service scene displayed on the display unit 120.

In the aforementioned exemplary embodiment, when there are a plurality of recognizable markers, the mobile terminal selects at least one marker to be included in a guide scene among the recognizable markers.

In another exemplary embodiment, the mobile terminal can generate the guide scene to include all the recognizable markers.

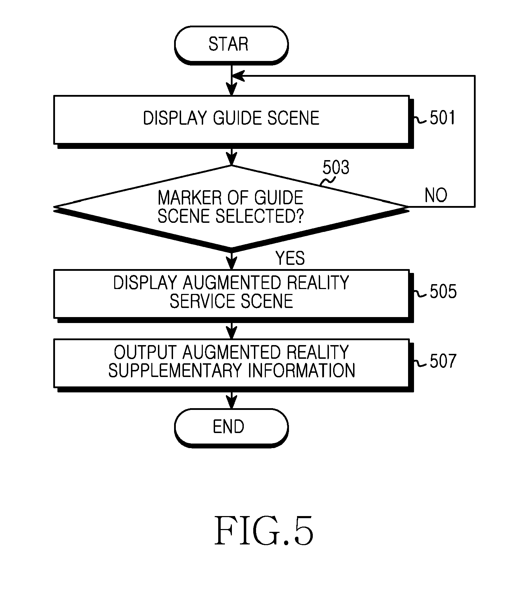

As described above, the mobile terminal provides a guide scene including at least one marker in order to help a user of the mobile terminal to recognize augmented reality supplementary information of the at least one marker. In an exemplary embodiment, the mobile terminal can provide the augmented realty supplementary information using the guide scene, as illustrated in FIG. 5 as below.

FIG. 5 illustrates a procedure for providing augmented reality supplementary information through a guide scene for a mobile terminal according to an exemplary embodiment of the present disclosure. At step 501, the mobile terminal displays a guide scene on the display unit 120. For example, the mobile terminal displays the guide scene together with an augmented reality service scene on the display unit 120, as illustrated in FIG. 2. For another example, the mobile terminal can add the guide scene to the augmented reality service scene displayed on the display unit 120 and display the resultant scene, as illustrated in FIG. 3.

Next, the mobile terminal proceeds to step 503 and determines if a marker displayed on the guide scene is selected by a user.

If it is determined at step 503 that the marker displayed on the guide scene is not selected by the user, the mobile terminal returns to step 501 and displays the guide scene on the display unit 120.

Alternatively, if it is determined at step 503 that the marker displayed on the guide scene is selected by the user, the mobile terminal proceeds to step 505 and changes an augmented reality service scene considering the marker selected by the user. For example, the mobile terminal changes the augmented reality service scene to be matched with the marker selected by the user.

After that, the mobile terminal proceeds to step 507 and reproduces augmented reality supplementary information of the marker selected at step 503.

Next, the mobile terminal terminates the algorithm of the present disclosure.

In the aforementioned exemplary embodiment, when a marker displayed on a guide scene is selected by a user, the mobile terminal changes an augmented reality service scene to be matched with the marker selected by the user.

In another exemplary embodiment, when the marker displayed on the guide scene is selected by the user, the mobile terminal can reproduce augmented reality supplementary information of the selected marker, instead of changing the augmented reality service scene.

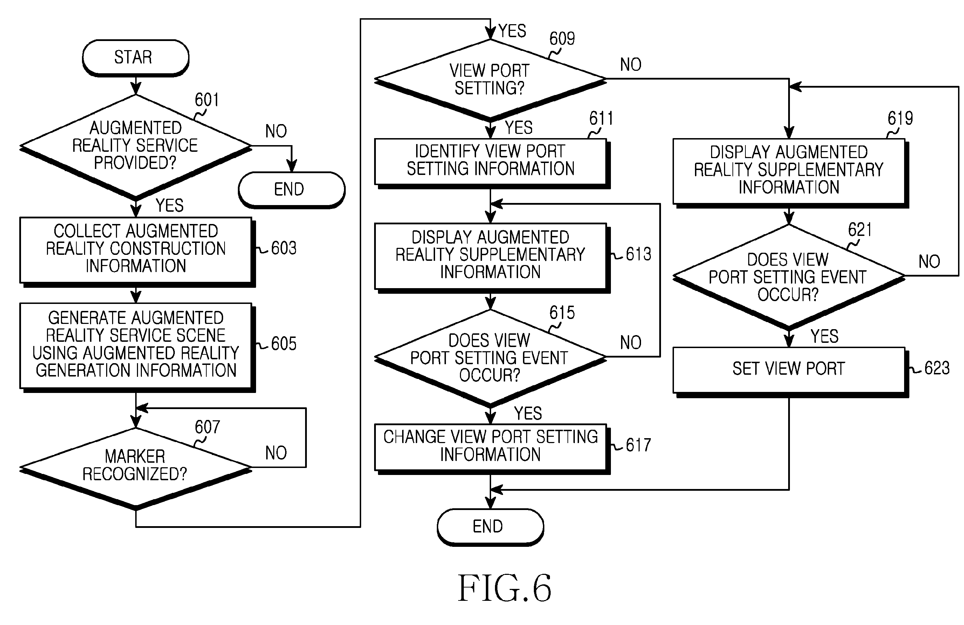

A method for reproducing augmented reality supplementary information in a mobile terminal is described below. FIG. 6 illustrates a procedure for providing augmented reality supplementary information in a mobile terminal according to an exemplary embodiment of the present disclosure. At step 601, the mobile terminal determines whether to provide an augmented reality service. For example, the mobile terminal determines whether to execute an augmented reality application according to user's manipulation.

If it is determined in step 601 not to provide the augmented reality service, the mobile terminal terminates the algorithm of the present disclosure.

Alternatively, if it is determined in step 601 to provide the augmented reality service, the mobile terminal proceeds to step 603 and collects augmented reality generation information. For instance, the mobile terminal collects the augmented reality generation information such as a surrounding image, a surrounding sound, motion information of the mobile terminal, location information of the mobile terminal and the like.

After collecting the augmented reality generation information, the mobile terminal proceeds to step 605 and generates an augmented reality service scene using the augmented reality generation information in order to provide the augmented reality service scene to a user for the augmented reality service, and displays the augmented reality service scene on the display unit 120. In an exemplary embodiment, the mobile terminal can display a guide scene including a recognizable marker, together with the augmented reality service scene, as illustrated in FIG. 2 or FIG. 3.

Next, the mobile terminal proceeds to step 607 and determines if the augmented reality service scene matched with a marker is recognized.

If it is determined at step 607 that the augmented reality service scene matched with the marker is recognized, the mobile terminal proceeds to step 609 and determines if a view port for augmented reality supplementary information of the marker recognized to match with the augmented reality service scene at step 607 has been set.

If it is determined at step 609 that the view port for the augmented reality supplementary information of the marker has been set, the mobile terminal proceeds to step 611 and identifies view port setting information for the augmented reality supplementary information of the marker recognized to match with the augmented reality service scene at step 607. Here, the view port setting information includes an output angle for the augmented reality supplementary information, an output size, an output color, a reproduction starting position, a reproduction speed and the like at augmented realty supplementary information output.

After identifying the view port setting information, the mobile terminal proceeds to step 613 and, according to the view port setting information, reproduces the augmented reality supplementary information of the marker recognized to match with the augmented reality service scene in step 607. For example, when the augmented reality supplementary information is a 3-Dimentional (3D) image, the mobile terminal produces the augmented reality supplementary information based on the output angle and output size, which are included in the view port setting information.

Next, the mobile terminal proceeds to step 615 and determines if a view port setting event occurs. For example, the mobile terminal determines if a view port setting menu for setting the view port for the augmented reality supplementary information produced in step 613 has been selected by a user of the mobile terminal.

If it is determined in step 615 that the view port setting event has not occurred, the mobile terminal returns to step 613 and produces the augmented reality supplementary information according to the view port setting information identified in step 611.

Alternatively, if it is determined at step 615 that the view port setting event has been occurred, the mobile terminal proceeds to step 617 and sets again the view port setting information for the augmented reality supplementary information. For example, when the view port setting event occurs, the mobile terminal displays a view port adjustment interface on the display unit 120. After that, the mobile terminal stores view port setting information provided from the user through the view port adjustment interface. In an exemplary embodiment, according to the view port setting information provided from the user through the view port adjustment interface, the mobile terminal changes a display scene of the augmented reality supplementary information displayed at step 613.

In another embodiment, when it is determined at step 609 that the view port for the augmented reality supplementary information of the marker has not been set, the mobile terminal proceeds to step 619 and produces the augmented reality supplementary information of the marker recognized to match with the augmented reality service scene at step 607. For instance, the mobile terminal displays the augmented realty supplementary information based on state information of the mobile terminal.

Next, the mobile terminal proceeds to step 621 and determines if the view port setting event occurs. For example, the mobile terminal determines if the view port setting menu for setting the view port for the augmented reality supplementary information produced at step 619 is selected by the user of the mobile terminal.

When it is determined at step 621 that the view port setting event does not occur, the mobile terminal returns to step 619 and produces the augmented reality supplementary information of the marker recognized to match with the augmented reality service scene at step 607.

Alternatively, when it is determined in step 621 that the view port setting event occurs, the mobile terminal proceeds to step 623 and sets view port setting information for the augmented reality supplementary information. For instance, when the view port setting event occurs, the mobile terminal displays a view port adjustment interface on the display unit 120. And then, the mobile terminal stores view port setting information provided from the user through the view port adjustment interface. In an exemplary embodiment, according to the view port setting information provided from the user through the view port adjustment interface, the mobile terminal changes a display scene of the augmented reality supplementary information displayed in step 619.

Next, the mobile terminal terminates the algorithm of the present invention. In the aforementioned exemplary embodiment, the mobile terminal sets a view port during augmented realty supplementary information reproduction. Also, the mobile terminal can reproduce augmented reality supplementary information according to view port setting information that has been set prior to an augmented reality service.

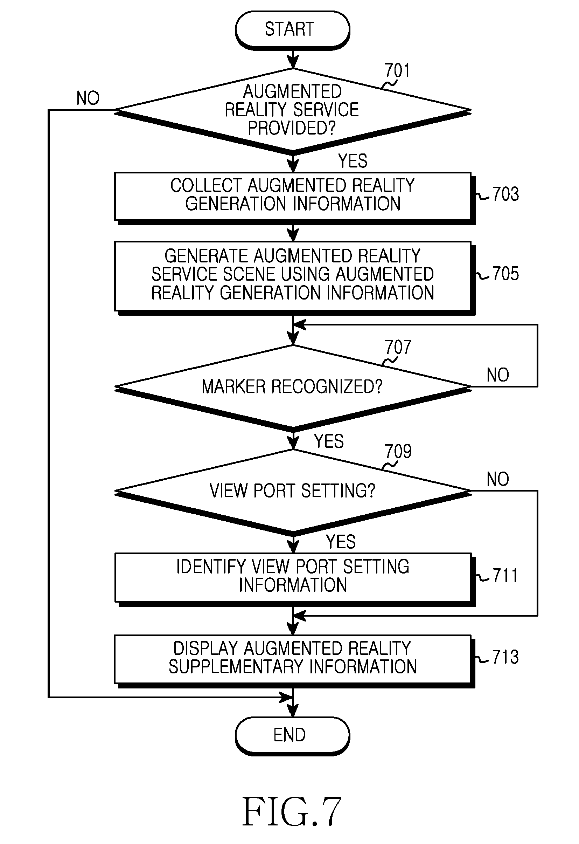

FIG. 7 illustrates a procedure for providing augmented reality supplementary information for a mobile terminal according to another exemplary embodiment of the present disclosure. At step 701, the mobile terminal determines whether to provide an augmented reality service. For example, the mobile terminal determines whether to execute an augmented reality application according to user's manipulation.

If it is determined at step 701 not to provide the augmented reality service, the mobile terminal terminates the algorithm of the present disclosure. When it is determined at step 701 to provide the augmented reality service, the mobile terminal proceeds to step 703 and collects augmented reality generation information. For instance, the mobile terminal collects the augmented reality generation information such as a surrounding image, a surrounding sound, motion information of the mobile terminal, location information of the mobile terminal and the like.

After collecting the augmented reality generation information, the mobile terminal proceeds to step 705 and constructs an augmented reality service scene using the augmented reality generation information in order to provide the augmented reality service scene to a user for the augmented reality service, and displays the augmented reality service scene on the display unit 120. In an exemplary embodiment, the mobile terminal can display a guide scene including a recognizable marker, together with the augmented reality service scene, as illustrated in FIG. 2 or FIG. 3.

Next, the mobile terminal proceeds to step 707 and determines if the augmented reality service scene matched with a marker is recognized. If when it is determined at step 707 that the augmented reality service scene matched with the marker has not been recognized, the mobile terminal proceeds to step 709 and determines if a view port for augmented reality supplementary information of the marker has been set.

If it is determined at step 709 that the view port for the augmented reality supplementary information of the marker has been set, the mobile terminal proceeds to step 711 and identifies preset view port setting information. Here, the view port setting information includes an output angle for the augmented reality supplementary information, an output size, an output color, a reproduction starting position, a reproduction speed and the like at augmented realty supplementary information output.

After identifying the view port setting information, the mobile terminal proceeds to step 713 and, according to the view port setting information, produces the augmented reality supplementary information of the marker recognized to match with the augmented reality service scene at step 707. For example, when the augmented reality supplementary information is a 3D image, the mobile terminal reproduces the augmented reality supplementary information based on the output angle and output size, which are included in the view port setting information. Next, the mobile terminal terminates the algorithm of the present invention.

As described above, exemplary embodiments of the present invention have an advantage in which a user of a mobile terminal can easily produce supplementary information for an augmented reality service, by providing a guide scene including marker information for the augmented reality service in a mobile terminal providing the augmented reality service.

Also, the exemplary embodiments of the present invention have an advantage in which a user of a mobile terminal can increasingly utilize an augmented reality service, by producing recognized supplementary information for the augmented reality service according to view port setting information in the mobile terminal providing the augmented reality service.
It will be appreciated that embodiments of the present invention according to the claims and description in the specification can be realized in the form of hardware, software or a combination of hardware and software.
Any such software may be stored in a computer readable storage medium. The computer readable storage medium stores one or more programs (software modules), the one or more programs comprising instructions, which when executed by one or more processors in an electronic device, cause the electronic device to perform a method of the present invention.
Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for providing an augmented reality service in a mobile terminal, the method comprising the steps of:
generating an augmented reality service scene using surrounding information;
determining at least one marker based on the augmented reality service scene;
generating a guide scene based on the at least one recognized marker;
adding the guide scene on a part of the augmented reality service scene; and displaying the added scene.

2. The method of claim 1, further comprising, if the marker displayed on the guide scene is selected, producing the augmented reality supplementary information of the marker.

3. The method of claim 1, further comprising:
if the augmented reality service scene matched with the marker included in the guide scene is recognized, identifying the augmented reality supplementary information of the marker; and
if a view port setting information for the augmented reality supplementary information has been set, displaying the augmented reality supplementary information on a screen according to the view port setting information,
wherein the view port setting information comprises at least one of an output angle for the augmented reality supplementary information, an output size, an output color, a reproduction starting position and a reproduction speed.

4. The method of claim 3, further comprising the steps of:
determining whether a view port setting event occurs after displaying the augmented reality supplementary information on the screen;
receiving a view port setting value when the view port setting event has been occurred; and
changing a display scene of the augmented reality supplementary information according to the view port setting value.

5. The method of claim 4, further comprising the step of storing the view port setting value.

6. A mobile terminal comprising:
a controller configured to generate an augmented reality service scene using surrounding information, to determine at least one marker based on the augmented reality service scene, to generate a guide scene based on the at least one recognized marker and to add the guide scene to a part of the augmented reality service scene; and
a display unit configured to display the added scene.

7. The method of claim 1 or the terminal of claim 6, wherein the surrounding information comprises at least one of a surrounding image, a surrounding sound, motion information of the mobile terminal and location information of the mobile terminal.

8. The method of claim 1 or the terminal of claim 6, wherein generating the guide scene comprises generating the guide scene comprising the at least one recognized marker.

9. The method of claim 1 or the terminal of claim 6, wherein generating the guide scene comprises the steps of:
selecting at least one marker among the recognized markers based on recognition probability of the maker; and
generating the guide scene comprising the selected at least one marker,
wherein the recognition probability of the marker is determined based on at least one of a distance between the mobile terminal and the marker and the number of times of recognition of the marker.

10. The method of claim 1 or the terminal of claim 6, wherein generating the guide scene comprises the steps of:
identifying guide scene generation information; and
generating the guide scene comprising the at least one marker according to the guide scene generation information,
wherein the guide scene generation information comprises at least one of a size of the guide scene, the transparency of the guide scene, and a color of the guide scene.

11. The method of claim 10 or the terminal of claim 10, wherein identifying the guide scene construction information determines the guide scene generation information based on at least one of ambient brightness of the mobile terminal and a motion of the mobile terminal.

12. The terminal of claim 6, wherein, when the marker displayed on the guide scene is selected, the controller is configured to produce the augmented reality supplementary information of the marker.

13. The terminal of claim 6, wherein, if the augmented reality service scene matched with the marker through the display unit is recognized, the controller is configured to control to identify the augmented reality supplementary information of the marker and, if a view port setting information for the augmented reality supplementary information has been set, the controller is configured to display the augmented reality supplementary information on a screen according to view port setting information, and
wherein the view port setting information comprises at least one of an output angle for the augmented reality supplementary information, an output size, an output color, a production starting position and a production speed.

14. The terminal of claim 13, wherein, if a view port setting event for the augmented reality supplementary information displayed on the display unit occurs, the controller is configured to change a display of the augmented reality supplementary information displayed on the display unit according to a view port setting value entered through an input unit.

15. The terminal of claim 14, wherein the controller is configured to store the view port setting value in a storage unit.
